# EUROPEAN PATENT APPLICATION

(11) **EP 3 437 845 A1**
(43) Date of publication of application: **06.02.2019**
(21) Application number: 17306036.9
(22) Date of filing: 03.08.2017
(51) Int. Cl.: B29D 11/00, B29C 45/14

(54) **METHOD FOR MAKING POLARIZED AND PHOTOCHROMIC THERMOPLASTIC LENSES**

(71) Applicant: Essilor International, 94220 Charenton-le-Pont (FR)
(72) Inventor: CHIU, Hao-Wen, Dallas, TX 75234 (US)
(74) Representative: Jacobacci Coralis Harle

(57) **Abstract**

Provided is a method for producing an optical article (250, 350) using an adhesion-promoting layer (230, 330) and injection molding techniques and optical articles (250, 350) having such an adhesion-promoting layer (230, 330). The method disclosed herein include applying the adhesion-promoting layer (230, 330) to a single or multilayered functional wafer (211, 311) to facilitate bonding between the functional wafer (211, 311) and a lens material (240, 340) injected onto functional wafer (211, 311) to form the optical article (250, 350).

## Description

### BACKGROUND

### 1. Field of Invention

The present disclosure relates generally to methods for making optical articles having single or multi-layer functional wafer and thermoplastic lenses by using adhesion-promoting layers; such methods may include using injection molding methods to produce an optical article.

### 2. Description of Related Art

Methods of making an optical element through injection molding include injecting a molten lens material against a functional wafer or by overmolding a functional wafer onto a lens. The molten lens material cools to form a lens, and the lens, together with the functional wafer, form an optical article. For optical articles, it is required and important to have a clear, non-hazy, invisible interface and strong adhesion between the functional wafer and the lens. To produce an optical article with these characteristics, the material of the functional wafer needs to be the same or compatible with the material of the lens. For example, if the surface of the functional wafer is not the same material as the lens material or is not compatible with the lens material, the resulting optical article will have poor adhesion between the functional wafer and the lens material and/or the interface between the functional wafer and the lens material will be cloudy and non-clear, both of which are unsuitable for optical lens applications. Since not many clear lens materials are compatible (or miscible) to form an invisible interface and create a strong fuse-bonding with commercially available functional wafers, methods employed by the industry are forced to use functional wafers having the same material as the lens material when making optical elements by injection molding.

### SUMMARY

The present disclosure addresses the need for an efficient and cost effective method of making an optical article using single or multi-functional wafers and a thermoplastic lens material. The inventors have found that using an adhesive-promoting layer enables the production of optical articles using widely available single or multi-functional wafers while at the same time ensuring not only an invisible interface but also a strong bond between the single or multi-functional wafer and the lens material, regardless of the materials of the functional wafer and lens.

In some aspects, an optical article may be provided, the optical article comprising a single or multi-layered functional wafer having: a first outer surface; a second outer surface opposite the first outer surface; and at least one light filtering functional layer disposed between the first outer surface and the second outer surface. At least one of the first outer surface and the second outer surface may be coated with an adhesion-promoting layer. In some aspects, the optical article comprises a lens comprised of a thermoplastic material, the lens being coupled to the optical article via the adhesion-promoting layer. In some aspects, the at least one light filtering functional layer may be a polarizing layer and/or a photochromic layer. The at least one light filtering functional layer may partially block visible light in the 400-500 nm wavelength range, visible light in the 500-700 nm wavelength range, and/or near-infrared light in the 700-1400 nm wavelength range.

In some aspects, the at least one light filtering functional may be a multi-layer optical film (MOF) filter, for example, a 3M MOF filter. In some aspects, the at least one light filtering functional layer may be a holographic film, for example, a Covestro light filtering functional layer, in which the at least one light filtering functional layer is a spectral filtering layer and provides augmented reality display by reflecting light from a light source embedded in, for example, eye wear associated with the optical article.

In some aspects, the lens may be coupled to the adhesion-promoting layer using injection molding techniques, and the lens may be a polyamide (PA), a thermoplastic polyurethane (TPU), a polycarbonate (PC), a polymethyl methacrylate (PMMA), a cyclic olefin copolymer (COC), and/or a cyclic olefin polymer (COP). In some aspects, the adhesion-promoting layer may be a UV curable acrylic and/or a polyurethane modified ethoxylated bisphenol A diacrylate.

In some aspects, the single or multi-layered functional wafer may comprise first and second protective layers, the first and second protective layers defining upper and lower surfaces of the single or multi-functional wafer. The upper and/or lower surface of the single or multi-layered functional wafer may be coated with an adhesion-promoting layer. In some aspects, the at least one light filtering functional layer may be a polyvinyl alcohol (PVA), polyurethane (PU), triacetate cellulose (TAC), or cellulose acetate butyrate (CAB), and the first and second protective layers are polycarbonate (PC) and/or the first and second protective layers are triacetate cellulose (TAC). In some aspects, the first and second protective layers may be polycarbonate (PC), and the adhesion-promoting layer may include a UV curable acrylic and may have a thickness in a range of essentially 1 µm to 10 µm In some aspects, the first and second protective layers may be polycarbonate (PC), and the adhesion-promoting layer may include polyurethane modified ethoxylated bisphenol A diacrylate and may be coated onto the upper surface and the lower surface of the single or multi-layered functional wafer.

In some aspects, a method for producing an optical article using injection molding comprises the steps of coating an adhesion-promoting layer onto a single or multi-layer functional wafer having: a first outer surface; a second outer surface opposite the first outer surface; and at least one light filtering functional layer disposed between the first outer surface and the second outer surface, where the adhesion-promoting layer coats the first outer surface and/or the second outer surface; inserting the single or multi-layer functional wafer into a mold cavity; and injecting a thermoplastic lens material bonding onto the adhesion-promoting layer to form an optical article, the optical article including: the single or multi-layer functional wafer; the adhesion-promoting layer; and a lens comprising the thermoplastic material. In some aspects, the at least one light filtering functional layer may be a polarizing layer and/or a photochromic layer. In some aspects, the at least one light filtering functional layer may partially block visible light in the 400-500 nm wavelength range, visible light in the 500-700 nm wavelength range, and/or near-infrared light in the 700-1400 nm wavelength range. In some aspects, the thermoplastic lens material may be a polyamide (PA), a thermoplastic polyurethane (TPU), a polycarbonate (PC), a polymethyl methacrylate (PMMA), a cyclic olefin copolymer (COC), and/or (vi) cyclic olefin polymer (COP). In some aspects, the adhesion promoting layer may be a UV curable acrylic, and/or a polyurethane modified ethoxylated bisphenol A diacrylate.

In other aspects, the single or multi-layer functional wafer may comprise: first and second protective layers with the at least one light filtering functional layer disposed between them, the at least one light filtering functional layer being a (i) polyvinyl alcohol (PVA), (ii) polyurethane (PU), (iii) triacetate cellulose (TAC), or (iv) cellulose acetate butyrate (CAB). In some aspects, the first and second protective layers are polycarbonate (PC), and/or the first and second protective layers are triacetate cellulose (TAC).

"Optical article," according to the disclosure, is defined as a transparent or translucent object through which a person on one side of the optical article may visually perceive an object on the opposite side. Examples of optical articles include sunglasses, fashion lenses, non-prescription and prescription lenses, sport masks, and goggles.

Any embodiment of any of the disclosed compositions and/or methods can consist of or consist essentially of-rather than comprise/include/contain/have-any of the described elements and/or features and/or steps. Thus, in any of the claims, the term "consisting of" or "consisting essentially of" can be substituted for any of the open-ended linking verbs recited above, in order to change the scope of a given claim from what it would otherwise be using the open-ended linking verb.

The term "substantially" and its variations are defined as being largely but not necessarily wholly what is specified as understood by one of ordinary skill in the art, and in one non-limiting embodiment substantially refers to ranges within 10%, within 5%, within 1%, or within 0.5%.

The term "about" or "approximately" or "substantially unchanged" are defined as being close to as understood by one of ordinary skill in the art, and in one non-limiting embodiment the terms are defined to be within 10%, preferably within 5%, more preferably within 1%, and most preferably within 0.5%.

The use of the word "a" or "an" when used in conjunction with the term "comprising" in the claims and/or the specification may mean "one," but it is also consistent with the meaning of "one or more," "at least one," and "one or more than one."

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

Other objects, features and advantages of the present invention will become apparent from the following detailed description. It should be understood, however, that the detailed description and the examples, while indicating specific embodiments of the invention, are given by way of illustration only. Additionally, it is contemplated that changes and modifications within the spirit and scope of the invention will become apparent to those skilled in the art from this detailed description.

### BRIEF DESCRIPTION OF THE FIGURES

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers. The figures are drawn to scale (unless otherwise noted), meaning the sizes of the depicted elements are accurate relative to each other for at least the embodiment depicted in the figures.
**FIG. 1** depicts a traditional injection molding technique for making an optical article whereby wafer is placed inside a cavity of a mold before injecting lens material onto the functional wafer.
**FIG. 2** depicts an injection molding technique for making an optical article whereby a single or multi-layered functional wafer is coated with an adhesion-promoting layer before injecting molten plastic onto the functional wafer.
**FIG. 3** depicts a second injection molding technique for making an optical article whereby a single or multi-layered functional wafer is coated with an adhesion-promoting layer before injecting molten plastic onto the functional wafer.

### DETAILED DESCRIPTION

Various features and advantageous details are explained more fully with reference to the non-limiting embodiments that are illustrated in the accompanying drawings and detailed in the following description. It should be understood, however, that the detailed description and the specific examples, while indicating embodiments, are given by way of illustration only, and not by way of limitation. Various substitutions, modifications, additions, and/or rearrangements will be apparent to those of ordinary skill in the art from this disclosure.

In the following description, numerous specific details are provided to provide a thorough understanding of the disclosed embodiments. One of ordinary skill in the relevant art will recognize, however, that the invention may be practiced without one or more of the specific details, or with other methods, components, materials, and so forth. In other instances, well-known structures, materials, or operations are not shown or described in detail to avoid obscuring aspects of the invention.

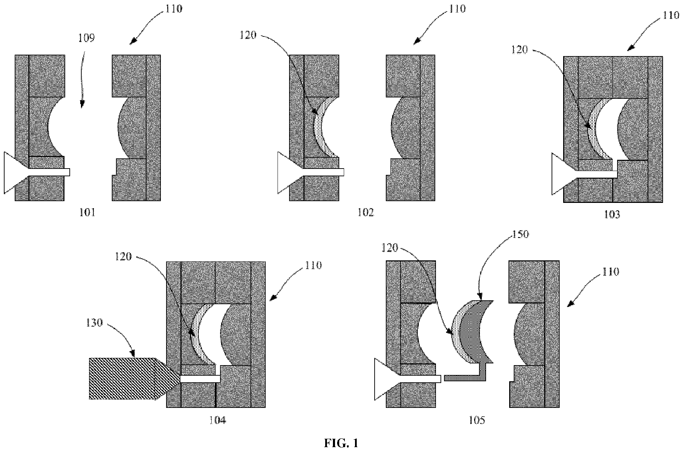

Referring now to FIG. 1, shown is a traditional method for an injection molding technique for making optical article 150. In step 101, cavity 109 of mold 110 is opened. In step 102, a wafer 120 is placed inside cavity 109 of mold 110. In step 103, mold 110 is closed. In step 104, lens material 130 is injected into cavity 109 of mold 110 against wafer 120. After the lens material is sufficiently cooled, mold 110 is opened and lens 150 is ejected from mold 110 at step 105.

In this manner, the method depicted in FIG. 1 has disadvantages. For example, the most widely available commercial wafers used for injection molding a lens are composed of certain materials, e.g., polycarbonate, tri-acetate cellulose, etc. These materials are not suitable for injection molding an optical article due to poor adhesion resulting from the incompatibility between the wafer materials and the lens material (e.g., Nylon (polyamide), TPU (thermoplastic polyurethane), COC (cyclic olefin copolymer) or COP (cyclic olefin polymer)). Accordingly, to produce a lens composed of commercial available wafers and a lens material using injection molding techniques, wafers of Nylon, TPU, COC, and/or COP must be produced first before injecting the lens material to ensure a suitable bond is created between the wafer and the lens material. This process is costly and time consuming.

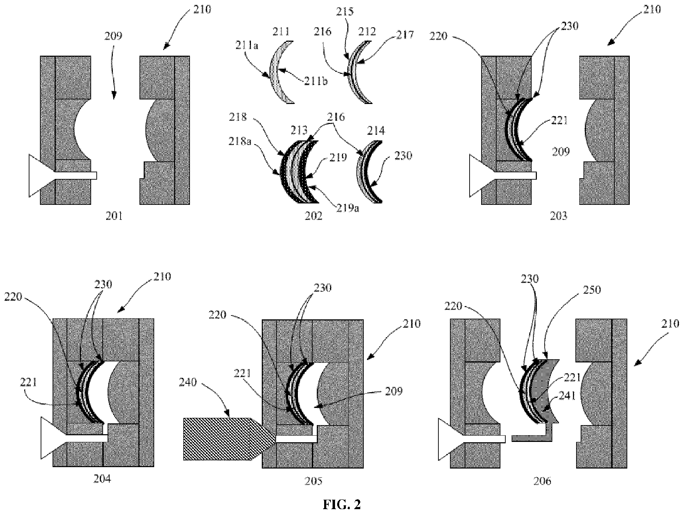

Referring now to FIG. 2, shown is an injection molding technique for making optical article 250 according to one embodiment. For example, at step 201, cavity 209 of mold 210 may be moved into an open position. At step 202, various functional wafers may be prepared. For example, functional wafer 211 may be prepared as a single layer functional wafer having a first surface 211a and a second surface 211b; functional wafer 212 may be prepared as a multi-layer functional wafer having a first outer surface 215, at least one light filtering functional layer 216, and second outer surface 217; functional wafer 213 may be prepared having a first protective layer 218 with upper surface 218a, at least one light filtering functional layer 216, and second protective layer 219 with lower surface 219a; and functional wafer 214 may be prepared as a multi-layer functional wafer having at least one light filtering functional layer 216 and may be coated with adhesion-promoting layer 230. Additionally, wafers 211, 212, 213, 214 may be coated with adhesion-promoting layer 230 on one surface or both surfaces of each wafer, respectively. In one aspect, wafers 211, 212, 213, 214 may be coated with adhesion-promoting layer 230 on one surface or both surfaces of each wafer, respectively. Wafers 211, 212, 213, and 214 may be coated with the adhesion-promoting layer(s) prior to being inserted into a mold cavity for injection molding. In some aspects, functional wafers 211, 212, 213, and 214 may be prepared inside cavity 209 of mold 210.

In step 203, functional wafer 220 is placed inside cavity 209 of mold 210. In this example, functional wafer 220 may be coated with adhesion-promoting layers 230 on both first and second outer surfaces of functional wafer 220, and functional wafer 220 includes at least one light filtering functional layer 221. In step 204, mold 210 is closed. In step 205, lens material 240 is injected into cavity 209 against adhesion-promoting layers 230. During the injection process, adhesion-promoting layers 230 facilitate bonding between lens material 240 and functional wafer 220 so that a strong, clear bond occurs between functional wafer 220 and lens material 240. After the lens material has sufficiently solidified, mold 210 is opened and optical article 250 is ejected from mold 210. In this example, optical article 250 includes adhesion-promoting layers 230, at least one light filtering functional layer 221, and lens 241. Furthermore, in this example, exposed adhesion-promoting layer 230 may serve as a primer for subsequent coating operations or to facilitate bonding for an additional overmolding step.

In this manner, the injection molding technique depicted in FIG. 2 utilizes adhesion-promoting layer 230 to facilitate the bonding of functional wafer 220 to lens 241, resulting in a clear and strongly bonded optical article 250 despite the potential of functional wafer 220 to be a different material than the material of lens 241.

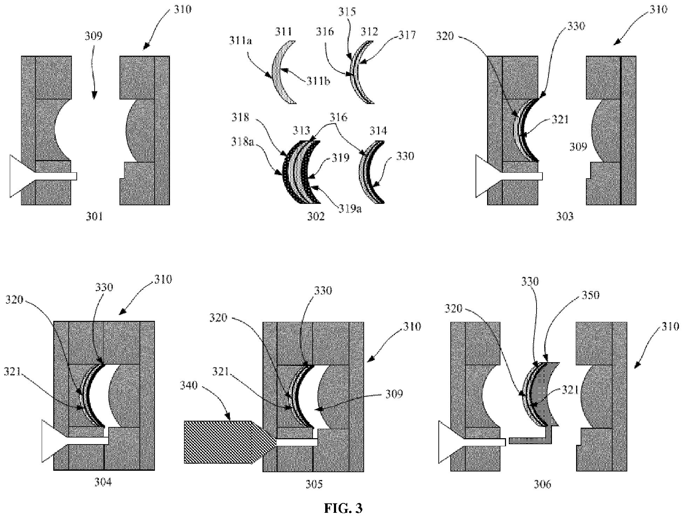

Referring now to FIG. 3, shown is an injection molding technique for making optical article 350 according to one embodiment. For example, at step 301, cavity 309 of mold 310 may be moved into an open position. At step 303, various functional wafers may be prepared. For example, functional wafer 311 may be prepared as a single layer functional wafer having a first surface 311a and a second surface 311b; functional wafer 312 may be prepared as a multi-layer functional wafer having a first outer surface 315, at least one light filtering functional layer 316, and second outer surface 317; functional wafer 313 may be prepared having a first protective layer 318 with upper surface 318a, at least one light filtering functional layer 316, and second protective layer 319 with lower surface 319a; and functional wafer 314 may be prepared as a multi-layer functional wafer having at least one light filtering functional layer 316 and may be coated with adhesion-promoting layer 330. Additionally, wafers 311, 312, 313, 314 may be coated with adhesion-promoting layer 230 on one surface or both surfaces of each wafer, respectively. In one aspect, wafers 311, 312, 313, 314 may be coated with adhesion-promoting layer 230 on one surface or both surfaces of each wafer, respectively. Wafers 311, 312, 313, and 314 may be coated with the adhesion-promoting layer(s) prior to being inserted into a mold cavity for injection molding. In some aspects, functional wafers 311, 312, 313, and 314 may be prepared inside cavity 309 of mold 310.

In step 303, functional wafer 320 is placed inside cavity 309 of mold 310. In this example, functional wafer 320 may be coated with adhesion-promoting layer 330 on first outer surface of functional wafer 330, and functional wafer 320 includes at least one light filtering functional layer 321. In step 304, mold 310 is closed. In step 305, lens material 340 is injected into cavity 309 against adhesion-promoting layer 330. After the lens material has sufficiently solidified, mold 310 is opened and optical article 350 is ejected from mold 310. In this example, optical article 350 includes adhesion-promoting layer 330, at least one light filtering functional layer 321, and lens 341.

In this manner, the injection molding technique depicted in FIG. 3 utilizes adhesion-promoting layer 330 to facilitate the bonding of functional wafer 320 to lens 341, resulting in a clear and strongly bonded optical article 350 regardless of functional wafer 320 being a different material than the material of lens 341.

### EXAMPLES

### Example 1: Injection Molding of TPUpolarized lenses

Injection molding experiments for making polarizing TPU lenses were performed using a Nissei FN4000 injection molding machine equipped with a 2-cavity φ76mm mold having a 3.25-base concave insert and a 6.10-base convex insert installed in each cavity. Following the operational procedure mentioned above, injection molding trials were carried out using the process parameters listed below:

| | |
|---|---|
| Material: | Lubrizol Isoplast 301 |
| Melt temperature: | 470 °F |
| Mold temperature: | 220 °F |
| Shot size: | 60 mm |
| Injection speed: | 6% |
| Injection time: | 25 seconds |
| Packing pressure: | 55% |
| Cooling time: | 225 seconds |

The first experiment was conducted using 0.8 mm thick 3.50-base PC/PVA/PC polarizing wafers that were coated with a 5-10 µm thick layer of UV curable acrylic (Essilor ESSUV) on the concave surface. All the resulting lens laminates not only had very strong bonding between the polarizing wafers and the TPU lenses but also exhibited very good polarization. The resulting lens laminates were subjected to aggressive RX edging without showing any delamination of the wafer from the lens.

A second experiment was done with 0.8 mm thick 3.50-base PC/PVA/PC wafers that were coated with polyurethane modified ethoxylated bisphenol A diacrylate on both the concave and the convex surfaces. Again, all the resulting lens laminates had very good polarization and very strong bonding between the polarizing wafers and the TPU lenses. The resulting lens laminates were objected to aggressive RX edging without showing any delamination of the wafer from the lens.

### Example 2: Injection Molding of Nylon (Polyamide) polarized lenses

Injection molding experiments for making polarizing Nylon lenses were performed using a Nissei FN4000 injection molding machine equipped with a 2-cavity φ76mm mold having a 3.25-base concave insert and a 6.10-base convex insert installed in each cavity. Following the operational procedure mentioned above, injection molding trials were carried out using the process parameters listed below:

| | |
|---|---|
| Material: | EMS-Grivory Grilamid |
| Melt temperature: | 550 °F |
| Mold temperature: | 250 °F |
| Shot size: | 63 mm |
| Injection speed: | 6% |
| Injection time: | 25 seconds |
| Packing pressure: | 30% |
| Cooling time: | 250 seconds |

Similar to Example 1, experiments were conducted using 0.8 mm thick 3.50-base PC/PVA/PC polarizing wafers that were coated with UV curable acrylic (Essilor ESSUV) or on the concave surface or with polyurethane modified ethoxylated bisphenol A diacrylate on both the concave and the convex surfaces. All the resulting lens laminates not only had very strong bonding between the polarizing wafers and the Nylon lenses but also exhibited very good polarization. The resulting lens laminates were subjected to aggressive RX edging without showing any delamination of the wafer from the lens.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not to be interpreted as including means-plus- or step-plus-function limitations, unless such a limitation is explicitly recited in a given claim using the phrase(s) "means for" or "step for," respectively.

## Claims

1. An optical article comprising:
a single or multi-layer functional wafer having:
a first outer surface;
a second outer surface opposite the first outer surface; and
at least one light filtering functional layer disposed between the first outer surface and the second outer surface, wherein at least one of the first outer surface and the second outer surface is coated with an adhesion-promoting layer; and
a lens comprising a thermoplastic material, the lens coupled to the optical article via the adhesion-promoting layer.

2. The optical article of claim 1, wherein the at least one light filtering functional layer is (i) a polarizing layer and/or (ii) a photochromic layer.

3. The optical article of claim 1, wherein the at least one light filtering functional layer partially blocks at least one of: (i) visible light in the 400-500 nm wavelength range; (ii) visible light in the 500-700 nm wavelength range; and (iii) near-infrared light in the 700-1400 nm wavelength range.

4. The optical article of claim 1, wherein the lens is coupled to the adhesion-promoting layer using injection molding techniques, and the lens is at least one of a (i) polyamide (PA); (ii) thermoplastic polyurethane (TPU); (iii) polycarbonate (PC); (iv) polymethyl methacrylate (PMMA); (v) cyclic olefin copolymer (COC); and (vi) cyclic olefin polymer (COP).

5. The optical article of claim 1, wherein the adhesion-promoting layer is at least one of (i) a UV curable acrylic; and (ii) a polyurethane modified ethoxylated bisphenol A diacrylate.

6. The optical article of claim 1, wherein the single or multi-layer functional wafer comprises first and second protective layers, the first and second protective layers defining upper and lower surfaces of the single or multi-layer functional wafer, and wherein the upper and/or lower surface of the single or multi-layer functional wafer is coated with an adhesion-promoting layer.

7. The optical article of claim 6, wherein the at least one light filtering functional layer is a (i) polyvinyl alcohol (PVA); (ii) polyurethane (PU); (iii) triacetate cellulose (TAC); or (iv) cellulose acetate butyrate (CAB), and wherein at least one of (i) the first and second protective layers are polycarbonate (PC), and/or (ii) the first and second protective layers are triacetate cellulose (TAC).

8. The optical article of claim 6, wherein the first and second protective layers are polycarbonate (PC), wherein the adhesion-promoting layer includes a UV curable acrylic, and wherein the adhesion-promoting layer has a thickness in a range of essentially 1 µm to 10 µm.

9. The optical article of claim 6, wherein the first and second protective layers are polycarbonate (PC), wherein the adhesion-promoting layer includes polyurethane modified ethoxylated bisphenol A diacrylate, and wherein the adhesion-promoting layer is coated onto the upper surface and the lower surface of the single or multi-layer functional wafer.

10. A method for producing an optical article using injection molding, the method comprising:
(a) coating an adhesion-promoting layer onto a single or multi-layer functional wafer having:
a first outer surface; a second outer surface opposite the first outer surface; and
at least one light filtering functional layer disposed between the first outer surface and the second outer surface, wherein the adhesion-promoting layer coats at least one of the first outer surface and the second outer surface;
(b) inserting the single or multi-layer functional wafer into a mold cavity; and
(c) injecting a thermoplastic lens material bonding onto the adhesion-promoting layer to form an optical article, the optical article including:
the single or multi-layer functional wafer;
the adhesion-promoting layer; and
a lens comprising the thermoplastic material.

11. The method of claim 10, wherein the at least one light filtering functional layer is (i) a polarizing layer and/or (ii) a photochromic layer.

12. The method of claim 10, wherein the at least one light filtering functional layer partially blocks at least one of: (i) visible light in the 400-500 nm wavelength range; (ii) visible light in the 500-700 nm wavelength range; and/or (iii) near-infrared light in the 700-1400 nm wavelength range.

13. The method of claim 10, wherein the thermoplastic lens material is at least one of a (i) polyamide (PA); (ii) thermoplastic polyurethane (TPU); (iii) polycarbonate (PC); (iv) polymethyl methacrylate (PMMA); (v) cyclic olefin copolymer (COC); and (vi) cyclic olefin polymer (COP).

14. The method of claim 10, wherein the adhesion-promoting layer is at least one of (i) a UV curable acrylic; and (ii) a polyurethane modified ethoxylated bisphenol A diacrylate.

15. The method of claim 10, wherein the single or multi-layer functional wafer comprises first and second protective layers with the at least one light filtering functional layer disposed between them, and wherein the at least one light filtering functional layer is a (i) polyvinyl alcohol (PVA); (ii) polyurethane (PU); (iii) triacetate cellulose (TAC); or (iv) cellulose acetate butyrate (CAB); and wherein at least one of (i) the first and second protective layers are polycarbonate (PC), and (ii) the first and second protective layers are triacetate cellulose (TAC).
